# DEMANDE DE BREVET EUROPEEN

(11) **EP 3 106 932 A1**
(43) Date de publication de la demande: **21.12.2016**
(21) Numéro de dépôt: 15172339.2
(22) Date de dépôt: 16.06.2015
(51) Int. Cl.: G04B 17/34

(54) **PROCÉDÉ DE FABRICATION COMPORTANT UNE ÉTAPE DE MONTAGE MODIFIÉE**

(71) Demandeur: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Couillard, Yann Luc Raymond

(57) **Abrégé**

L'invention se rapporte à un procédé de fabrication comportant une étape de montage permettant d'intercaler une partie intermédiaire destinée à garantir la planéité de la face qui doit être soudée.

## Description

### Domaine de l'invention

L'invention se rapporte à un procédé de fabrication comportant une étape de montage modifiée et, plus précisément, une telle étape permettant une planéité de surface améliorée.

### Arrière-plan de l'invention

Il est connu du document PCT/EP2015/061774 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne devait pas excéder 0,5 micromètre sous peine que celles-ci ne puissent pas être soudées.

### Résumé de l'invention

Le but de la présente invention est de pallier tout ou partie les inconvénients cités précédemment en proposant un nouveau procédé de fabrication avec au moins une surface de contact comportant une planéité améliorée permettant l'assemblage des pièces par soudage.

A cet effet, selon un premier mode de réalisation, l'invention se rapporte à un procédé de fabrication d'un composant horloger comportant les étapes suivantes :
- former une première pièce à base de métal et une deuxième pièce ;
- monter une partie intermédiaire sur une portée de la première pièce ;
- monter une surface de la deuxième pièce sur une surface de la partie intermédiaire ;
- souder, par rayonnement électromagnétique du type laser, la surface de la deuxième pièce montée sur la surface de la partie intermédiaire afin de les solidariser.

De plus, selon un deuxième mode de réalisation, l'invention se rapporte à un procédé de fabrication d'un composant horloger comportant les étapes suivantes :
- former une première pièce à base de métal et une deuxième pièce ;
- souder, par rayonnement électromagnétique du type laser, une surface de la deuxième pièce sur une partie intermédiaire afin de les solidariser ;
- monter l'ensemble deuxième pièce - partie intermédiaire sur une portée de la première pièce.

On comprend donc que, selon les deux modes de réalisation, le procédé de fabrication utilise une partie intermédiaire avec une face dont au moins une surface est parfaitement plane et perpendiculaire afin de garantir le soudage avec la deuxième pièce.

Conformément à d'autres variantes avantageuses de l'invention :
- la deuxième pièce est à base de silicium ou à base de céramique ;
- la deuxième pièce comporte en outre au moins un revêtement partiel de métal, d'oxyde de silicium, de nitrure de silicium, de carbure de silicium ou d'un allotrope du carbone ;
- la première pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages ;
- la partie intermédiaire comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier - spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document PCT/EP2015/061774 ;
- la figure 5 est une représentation en coupe d'un assemblage selon l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une deuxième pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

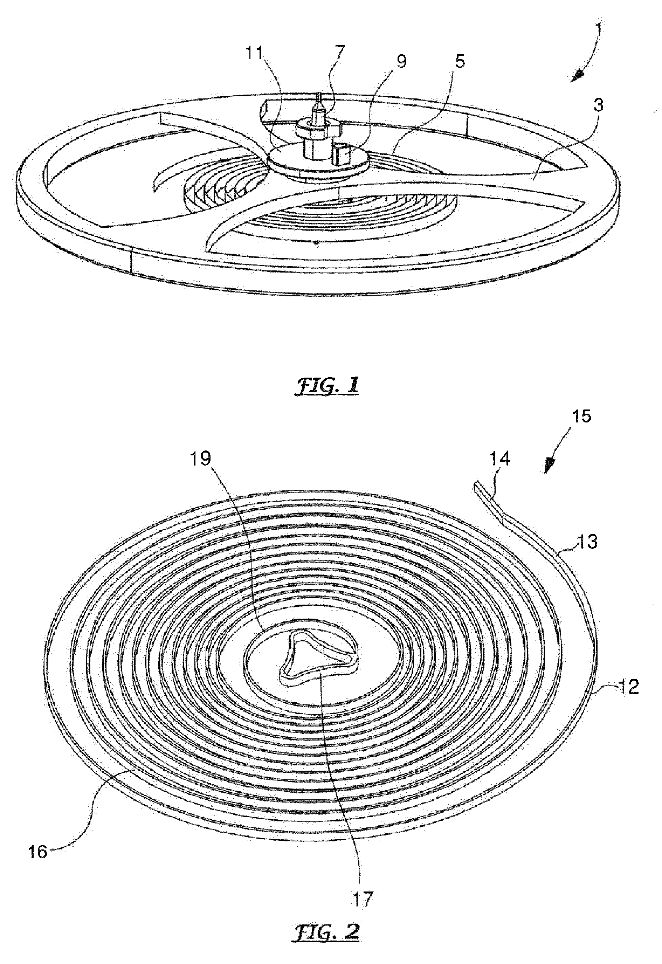

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'axe notamment pour autoriser son centrage par rapport à ce dernier.

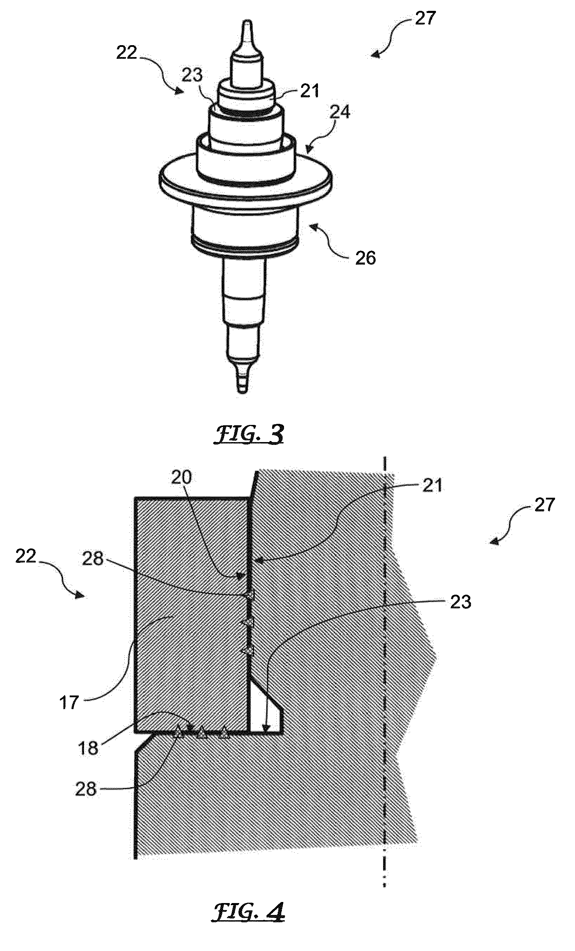

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 sont soudés à la virole 17 comme enseigné dans le document PCT/EP2015/061774.

Toutefois, dans le cadre du développement de l'enseignement du document PCT/EP2015/061774, il est rapidement ressorti que l'interstice entre les pièces ne doit pas excéder 0,5 micromètre sous peine que celles-ci ne puissent pas être soudées.

Selon l'invention, le procédé de fabrication comporte une étape destinée à rapporter une partie intermédiaire afin d'offrir une face avec une surface parfaitement plane et perpendiculaire garantissant le soudage.

Selon un premier mode de réalisation, le procédé selon l'invention comporte une première étape destinée à former une première pièce à base de métal comme dans le présent exemple un arbre 37 et une deuxième pièce comme dans le présent exemple un spiral 15 à base de silicium.

Le procédé se poursuit avec une deuxième étape destinée à monter une partie intermédiaire 41 comme, par exemple, une rondelle, sur une portée 33 de la première pièce formée par l'arbre 37. Avantageusement, cette partie intermédiaire 41 possède une surface parfaitement plane et perpendiculaire garantissant le soudage avec la deuxième pièce formée notamment par la virole 17 du spiral 15.

La partie intermédiaire 41 peut, par conséquent, également être formée à base de métal et, par exemple, être chassée contre la tige 31 sensiblement verticale de la première pièce formée par l'arbre 37. On comprend donc que la deuxième pièce formée notamment par la virole 17 ne sera plus soudée sur la tige 21 et/ou la portée 23 comme dans l'exemple de la figure 4 mais sur la tige 31 et/ou la partie intermédiaire 41.

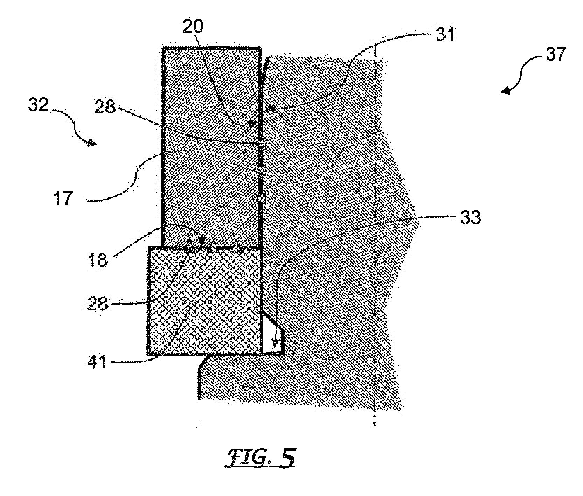

Le procédé comporte ensuite une troisième étape destinée à monter une surface de la deuxième pièce formée notamment par la virole 17 sur une surface de la partie intermédiaire 41 comme illustré à la figure 5.

Enfin, le procédé se termine avec une étape destinée à souder, par rayonnement électromagnétique du type laser, la surface de la deuxième pièce formée notamment par la virole 17 montée sur la surface de la partie intermédiaire 41 afin de les solidariser selon les soudures 28 avec la garantie que le spiral 15 et l'arbre 37 soient solidarisés grâce à la bonne planéité de la pièce intermédiaire 41.

Bien entendu, comme visible à la figure 5, des soudures 28 pourraient, de manière alternative ou de manière additionnelle, être formées lors de cette dernière étape entre la tige 31 et la virole 17.

Selon un deuxième mode de réalisation, le procédé selon l'invention comporte une première étape destinée à former une première pièce à base de métal comme dans le présent exemple un arbre 37 et une deuxième pièce comme dans le présent exemple un spiral 15 à base de silicium.

Le procédé se poursuit avec une deuxième étape destinée à souder, par rayonnement électromagnétique du type laser, une surface de la deuxième pièce formée notamment par la virole 17 du spiral 15 sur une partie intermédiaire 41 comme, par exemple, une rondelle afin de les solidariser.

Avantageusement, cette partie intermédiaire 41 possède une surface parfaitement plane et perpendiculaire garantissant le soudage avec la deuxième pièce formée notamment par la virole 17 selon les soudures 28 avec la garantie que le spiral 15 et la partie intermédiaire 41 soient solidarisés grâce à la bonne planéité de la pièce intermédiaire 41.

La partie intermédiaire 41 peut, par conséquent, également être formée à base de métal. On comprend donc que la deuxième pièce formée notamment par la virole 17 ne sera plus soudée sur la tige 21 et/ou la portée 23 comme dans l'exemple de la figure 4 mais sur la tige 31 et/ou la partie intermédiaire 41.

Enfin, le procédé se termine avec une étape destinée à monter l'ensemble deuxième pièce formée notamment par la virole 17 - partie intermédiaire 41 sur une portée 33 de la première pièce formée par l'arbre 37 avec la garantie que le spiral 15 et l'arbre 37 soient solidarisés.

Comme visible à la figure 5, des soudures 28 pourraient, de manière additionnelle, être formées lors de cette dernière étape entre la tige 31 et la virole 17.

Bien entendu, la présente invention ne se limite pas à l'exemple illustré mais est susceptible de diverses variantes et modifications qui apparaîtront à l'homme de l'art. En particulier, la pièce intermédiaire 41 ne saurait se limiter à une section carrée formant un anneau. A titre d'exemple non limitatif, la section pourrait alternativement être en forme de L afin de former un anneau muni d'une collerette monobloc ou d'une bague monobloc. On comprend alors que la partie intermédiaire 41 pourrait alors recevoir seule la virole 17 en fournissant deux surfaces respectivement verticale et horizontale dont les planéités sont améliorées par rapport respectivement aux surfaces de la tige 31 et de la portée 33.

## Revendications

1. Procédé de fabrication d'un composant horloger comportant les étapes suivantes :
- former une première pièce (37) à base de métal et une deuxième pièce (15) ;
- monter une partie intermédiaire (41) sur une portée (33) de la première pièce (37) ;
- monter une surface (18, 20) de la deuxième pièce (15) sur une surface de la partie intermédiaire (41) ;
- souder, par rayonnement électromagnétique du type laser, la surface (18, 20) de la deuxième pièce (15) montée sur la surface de la partie intermédiaire (41) afin de les solidariser.

2. Procédé de fabrication d'un composant horloger comportant les étapes suivantes :
- former une première pièce (37) à base de métal et une deuxième pièce (15) ;
- souder, par rayonnement électromagnétique du type laser, une surface (18, 20) de la deuxième pièce (15) sur une partie intermédiaire (41) afin de les solidariser ;
- monter l'ensemble deuxième pièce (15) - partie intermédiaire (41) sur une portée (33) de la première pièce (37).

3. Procédé selon la revendication 1 ou 2, **caractérisée en ce que** la deuxième pièce (15) est à base de silicium ou à base de céramique.

4. Procédé selon la revendication précédente, **caractérisée en ce que** la deuxième pièce (15) comporte en outre au moins un revêtement partiel de métal, d'oxyde de silicium, de nitrure de silicium, de carbure de silicium ou d'un allotrope du carbone.

5. Procédé selon l'une des revendications précédentes, **caractérisée en ce que** la première pièce (37) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

6. Procédé selon l'une des revendications précédentes, **caractérisée en ce que** la partie intermédiaire (41) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.
